# EUROPEAN PATENT APPLICATION

(11) **EP 2 640 072 A1**
(43) Date of publication of application: **18.09.2013**
(21) Application number: 12159246.3
(22) Date of filing: 13.03.2012
(51) Int. Cl.: H04N 7/22

(54) **System and method for transmitting a video signal**

(71) Applicant: Alcatel Lucent International, 75009 Paris (FR)
(72) Inventor: Matsumoto, Michel, 78141 VELIZY (FR)
(74) Representative: Lebkiri, Alexandre

(57) **Abstract**

The present invention relates especially to a system (1) for transmitting a video signal. System (1) comprises:
- a modulator (2) adapted to transform a video input stream into digital video samples,
- a multi-rate filter (3) connected to said modulator (2), said multi-rate filter (3) being adapted to adapt sampling frequency of said digital video samples according to interface protocols used by a fiber optic cable,
- a fiber optic cable (4) connected to said multi-rate filter (3) and connected to at least one remote radio head (RRH),
- at least one remote radio head (RRH), said remote radio head (RRH) being adapted to receive said digital video samples adapted from said fiber optic cable (4), adapted to convert said digital video samples adapted into analog video signal and adapted to transmit said analog video signal.

## Description

### FIELD OF THE INVENTION

The present invention relates to a system for transmitting a video signal and also to a method for transmitting a video signal.

### BACKGROUND

Currently, countries are moving from analog television broadcast to digital television broadcast. For analog television, one frequency is allocated to one television program, whereas for digital television one frequency is shared between several television programs.

Therefore, with digital television, when one frequency is not correctly received at one antenna, it's not only one program which is affected but a set of them.

Furthermore, when the signal is low, the picture freezes and the signal demodulator stops until it gets a better signal. To avoid these drawbacks, supplementary transmitters are installed, thus the cost of a video broadcast network increases.

In digital television network, a transmitter connected to an antennae system is used for each site. A transmitter comprises generally a modulator, an amplifier, a filter, a feeder and a shelter to keep all these equipments indoor. The amplifier is connected to the antenna, often placed at approximately 100 meters. It is to be noted that to get 100W at the antenna connector, the required power is three times higher at the transmitter mainly due to cable losses.

These drawbacks drastically increase power consumption of power amplifier and are due to the loss in the cable and connectors between power amplifier and antenna.

Moreover, with the growing request of frequency bands for wireless communication networks, the UHF-Band (582-862 MHz), initially reserved for digital television, has been reduced by 30MHz. This 30MHz frequency has been allocated for wireless communication.

However, DVB-T (Digital Video Broadcasting - Terrestrial) receivers have been designed to cover the whole UHF-Band and due to the part of UHF-Band used by wireless communication, DVB-T receivers absorb unwanted cellular signals. DVB-T receivers were not designed to protect themselves against possible interferences resulting from mobile communication systems.

### SUMMARY OF THE INVENTION

Accordingly, the present invention is directed to a system and a method for transmitting a video signal allowing to decrease power consumption of system for transmitting video signal and to avoid interference with frequencies used by cellular communications.

To achieve these aims, and in accordance with the purpose of the invention as embodied, the present invention relates to a system for transmitting a video signal, said system comprising:
- a modulator adapted to transform a video input stream into digital video samples,
- a multi-rate filter connected to said modulator, said multi-rate filter being adapted to adapt sampling frequency of digital video samples according to interface protocols used by a fiber optic cable,
- a fiber optic cable connected to said multi-rate filter and connected to at least one remote radio head,
- at least one remote radio head, said remote radio head being adapted to receive said digital video samples adapted from said fiber optic cable, adapted to convert said digital video samples adapted into analog video signal and adapted to transmit said analog video signal.

In addition to the main features aforementioned in the previous paragraph, the system for transmitting a video signal according to the invention may also have one or more of the additional features below, taken individually or in any technically possible combination.

In one embodiment, said interface protocol used by said fiber optic cable is the common public radio interface protocols "CPRI".

In one embodiment, said interface protocol used by said fiber optic cable is the Open Base Station Architecture Initiative "OBSAI".

In one embodiment, said fiber optic cable is shared between digital radio samples and digital video samples adapted, at least one antenna carrier being reserved to transport digital video samples.

In one embodiment, digital video signal adapted is at least 20dB below digital radio signal.

In one embodiment, said system for transmitting video signal comprises three remote radio heads, said three radio heads being connected to the same modulator.

In one embodiment, remote radio heads are positioned according to a chain topology, each remote radio head of said chain topology being used as an optic communication repeater.

In one embodiment, said modulator is disposed into an evolved NodeB.

The invention also relates to a method for transmitting a video signal comprising:
- modulating, via a modulator, a video input stream into digital video samples,
- adapting, via a multi-rate filter connected to said modulator, sampling frequency of said digital video samples according to interface protocols used by a fiber optic cable,
- transmitting, via a fiber optic cable, said digital video samples adapted from said multi-rate filter to at least one remote radio head,
- receiving, by at least one remote radio head, digital video samples adapted,
- converting, by at least one remote radio head, digital video samples adapted into analog video signal,
- transmitting, by at least one remote radio head, said analog video signal.

Furthermore, the invention concerns also a computer program product for a computer, comprising a set of instructions, which when loaded into said computer, causes the computer to carry out the method for transmitting a video signal according to the invention.

### BRIEF DESCRIPTION OF THE DRAWINGS

The accompanying drawings are included to provide a further understanding of the invention and are incorporated in and constitute a part of this specification, to illustrate embodiments of the invention and, together with the description, to explain the principles of the invention:
- Figure 1 represents, in a not limited embodiment, a system for transmitting a video signal according to the invention;
- Figure 2 illustrates, in a not limited embodiment, a multi-rate filter used by the system for transmitting a video signal according to the invention;
- Figure 3 illustrates, in a not limited embodiment, a multiplexing;
- Figure 4 represents, in a not limited embodiment, a fiber optic cable used by a system for transmitting a video signal according to the invention;
- Figure 5 illustrates, in a not limited embodiment, a chain topology according to the invention;
- Figure 6 illustrates, in a not limited embodiment, a method for transmitting a video signal according to the invention.

The same reference numerals will be used throughout the drawings to refer to the same or like parts.

### DESCRIPTION OF EMBODIMENTS

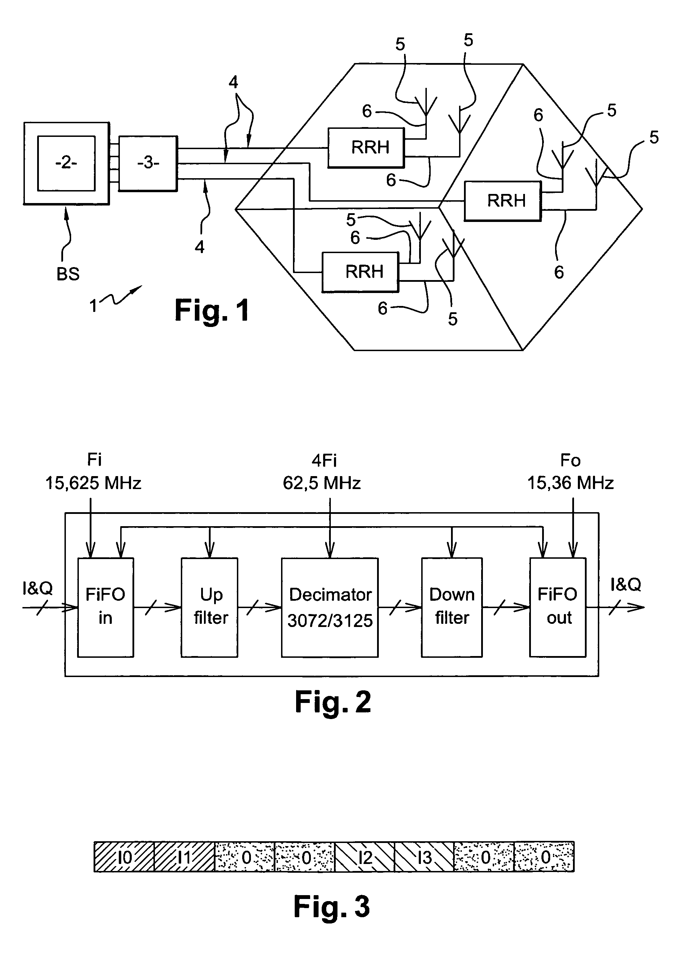

In reference to figure 1, a system 1 for transmitting video signal according to the invention is represented.

The system 1 comprises a:
- a modulator 2 adapted to transform a video input stream into digital video samples,
- a multi-rate filter 3 connected to said modulator 2, said multi-rate filter 3 being adapted to adapt sampling frequency of said digital video samples according to interface protocols used by a fiber optic cable,
- three fiber optic cables 4 connected to said multi-rate filter 3, each fiber optic cable 4 being connected to one remote radio head RRH well-Known by the man skilled in the art,
- three remote radio heads RRH, each remote radio head RRH being adapted to:
   - receive said digital video samples adapted from said fiber optic cable 4,
   - convert said digital video samples adapted into analog video signal, and,
   - transmit said analog video signal.

More particularly, the modulator 2 is implemented in a base station BS, for example an evolved NodeB (or eNodeB). Evolved NodeB is the radio transmission node of E-UTRAN Access Network.

In the example, the modulator 2 is connected to three remote radio heads RRH over three optical fibers 4, each remote radio head RRH comprises a power amplifier (not represented) and is located close to a antenna 5 in order to avoid power drop in the cables 6 between the remote radio head (more particularly, the amplifier) and the antenna 5. Thanks to the invention, using of remote radio heads RHH allows avoid 4.5 dB losses due to cables and several connectors which are used today. This particularity allows to decrease power amplifier consumption.

In a not limited embodiment, the Common Public Radio Interface CPRI standards is the interface protocol used to carry digital video samples on fiber optic cables 4 up remote radio heads RRH to cover a three-sector cell C.

In another not limited embodiment, the Open Base Station Architecture Initiative OBSAI standards is the interface protocol used to carry digital video samples on fiber optic cables 4 up remote radio heads RRH to cover the three-sector cell C.

It is to be noted that each remote radio head RRH receives digital video samples (also named I/Q samples) embedded in, for example, CPRI, and is able to convert digital video samples into analog signal and transmits its content.

Thanks to the invention, the system cost will be inferior to a formal broadcast site (50% less CAPEX). Indeed, 20W, 40W and 60W remote radio head RRH are off the shelf equipments. But, the Common Public Radio Interface CPRI and the Open Base Station Architecture Initiative OBSAI are not designed to transport digital video samples. For example, the CPRI line bit rate has been chosen based on the basic Universal Mobile Telecommunications System UMTS.

In one not limited embodiment of the invention, the digital video samples bit rate is adapted according to this UMTS in order to use existing equipments. This is done by integrating a multi-rate filter 3 at the modulator 2 output.

More particularly, the required nominal rate for CPRI is 15.36 MHz. In a not limited embodiment, for the Alcatel-Lucent™ digital video broadcast modulator 2, the sample rate output is done at 15.625MHz. Therefore, the main task of the multi-rate filter 3 is to adapt both line rates by keeping a signal to noise ratio SNR highest as possible. A target of 45dB is a minimum requirement.

Figure 2 represents a not limited embodiment of a multi-rate filter 3 according to the invention, said multi-rate filter 3 being adapted to adapt sampling frequency of digital video samples according to CPRI.

In a first time, the data of digital video samples delivered by the modulator 2 are written in a FIFO well-known by the man skilled in the art at a nominal rate of, for example, Fi = 15,625 MHZ.

Then, data are:
- oversampled by 2 by an up-filter,
- delivered by a decimator at a rate of, for example, 4Fi = 62,5 MHZ; 3072 data are validated on a segment of 3125 periods by said decimator
- down sampled by a down-filter,
- written back in a FIFO, the FIFO being read at a nominal rate of, for example, Fo = 15,36 MHz.

At the output of the FIFO, I and Q symbols of data are multiplexed. As represented in figure 3, a pair of zeros is inserted between a pair of data.

At the output of the multi-rate filter 3, sampling frequency of digital video samples is conforms to CPRI.

Furthermore, the invention proposes to mix television and long term evolution LTE signals by sharing the same equipment from the optical fiber up to the antenna system.

The Common Public Radio Interface CPRI offers "sub-channels" transport. These sub-channels are called AxC (antenna carrier). And its number of varies according to the adopted CPRI line rate. (CPRI Specification V4.1 2009-02-18 sect. 4.2.1)

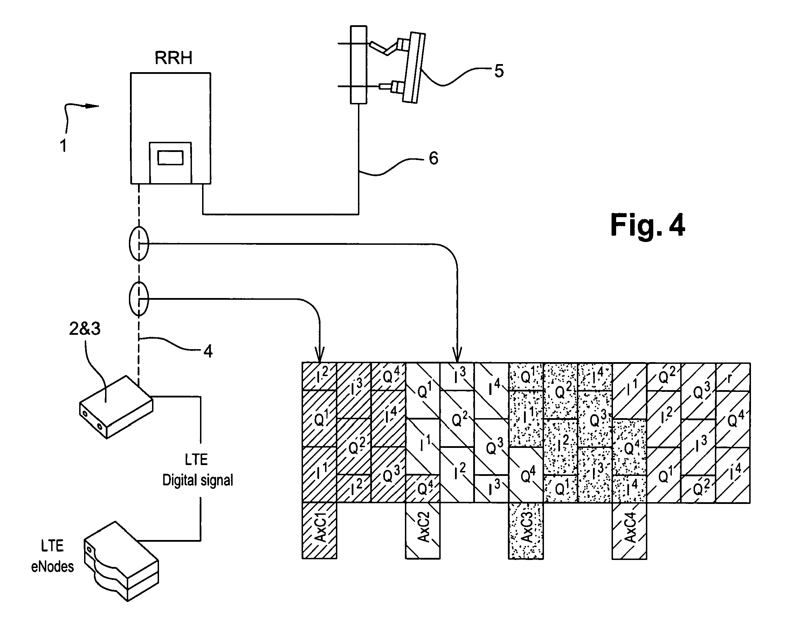

As illustrated in figure 4 and according to the invention, fiber optic cable 4 is shared between digital radio samples (for example long term evolution signal, also named LTE signal) and digital video samples, one antenna carrier AxC1, AxC2, AxC3 or AxC4 being reserved to transport digital video samples.

Thus, the invention offers to use one of the antenna carriers, for example AxC2, to transport digital video samples in the same way LTE signal is transported.

The required power of the digital video signal close to the LTE signal will be very low. Advantageously, digital video signal 20dB below the LTE signal is enough to avoid interference between digital video signal and LTE signal. Thus, according to the invention the minimum gap between antenna carrier AxC2 used to transport digital video samples and antenna carrier AxC1 used to transport digital radio samples for communication is 20dB.

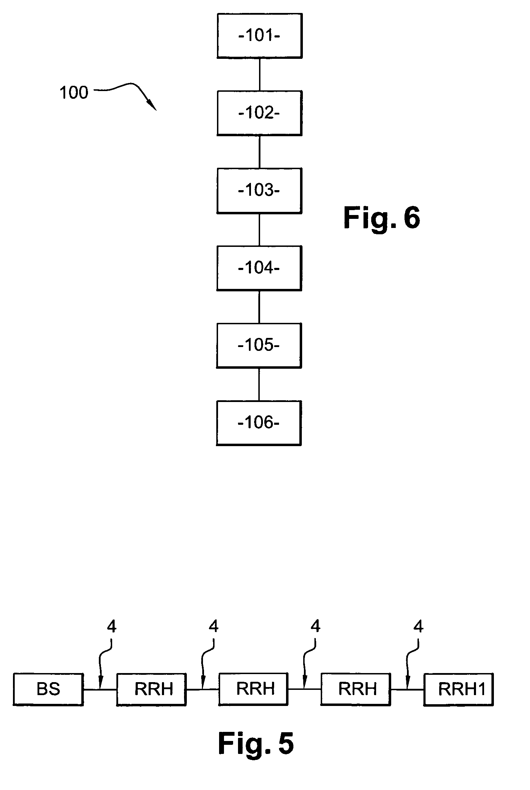

In a not limited embodiment illustrated in figure 5, remote radio heads RRH are positioned according to a daisy-chain topology, each remote radio head RRH of said chain topology being used as an optic communication repeater. Optic communication repeater is well-known by man skilled in the art and allows to overcoming loss due to attenuation of the fiber optic cable 4.

Advantageously, as remote radio heads RRH are used as optic communication repeater in the invention, the distance between the furthest RRH and the modulator 2 can be very important, for example, 500 Kilometres. This particularity permits to decrease the cost of system for transmitting video signal. Indeed, a unique modulator 2 can be used for several remote radio heads RRH, each remote radio RRH covering a site.

The invention relates also to a method 100 for transmitting a video signal.

As illustrated in figure 6 the method comprises:
- modulating 101, via a modulator 2, a video input stream into digital video samples,
- adapting 102, via a multi-rate filter 3 connected to said modulator 2, sampling frequency of said digital video samples according to interface protocols used by a fiber optic cable,
- transmitting 103, via a fiber optic cable 4, said digital video samples adapted from said multi-rate filter 3 to at least one remote radio head RRH,
- receiving 104, by at least one remote radio head RRH, said digital video samples adapted,
- converting 105, by at least one remote radio head RRH, said digital video samples adapted into analog video signal,
- transmitting 106, by said at least one remote radio head RRH, said analog video signal.

## Claims

1. System (1) for transmitting a video signal, said system (1) comprising :
- a modulator (2) adapted to transform a video input stream into digital video samples,
- a multi-rate filter (3) connected to said modulator (2), said multi-rate filter (3) being adapted to adapt sampling frequency of said digital video samples according to interface protocols used by a fiber optic cable,
- a fiber optic cable (4) connected to said multi-rate filter (3) and connected to at least one remote radio head (RRH),
- at least one remote radio head (RRH), said remote radio head (RRH) being adapted to receive said digital video samples adapted from said fiber optic cable (4), adapted to convert said digital video samples adapted into analog video signal and adapted to transmit said analog video signal.

2. System (1) according to claim 1, wherein said interface protocols used by said fiber optic cable (4) is the common public radio interface protocols "CPRI".

3. System (1) according to claim 1, wherein said interface protocols used by said fiber optic cable (4) is the Open Base Station Architecture Initiative "OBSAI".

4. System (1) according to any of the previous claims, wherein said fiber optic cable (4) is shared between digital radio samples and digital video samples adapted, at least one antenna carrier (AxC1, AxC2, AxC3, AxC4) being reserved to transport digital video samples adapted.

5. System (1) according to claim 4, wherein said digital video signal adapted is at least 20dB below digital radio signal.

6. System (1) according to any of the previous claims, wherein said system (1) comprises three remote radio heads (RRH), said three radio heads (RRH) being connected to the same modulator (2).

7. System (1) according to any of the previous claims, wherein remote radio heads (RRH) are positioned according to a daisy-chain topology, each remote radio head (RRH) of said chain topology being used as an optic communication repeater.

8. System (1) according to any of the previous claims, wherein said modulator (2) is disposed into an evolved NodeB.

9. Method (100) for transmitting a video signal comprising:
- modulating (101), via a modulator (2), a video input stream into digital video samples,
- adapting (102), via a multi-rate filter (3) connected to said modulator (2), sampling frequency of said digital video samples according to interface protocols used by a fiber optic cable,
- transmitting (103), via a fiber optic cable (4), said digital video samples adapted from said multi-rate filter (3) to at least one remote radio head (RRH),
- receiving (104), by at least one remote radio head (RRH), said digital video samples adapted,
- converting (105), by at least one remote radio head (RRH), said digital video samples adapted into analog video signal,
- transmitting (106), by said at least one remote radio head (RRH), said analog video signal.

10. A computer program product for a computer, comprising a set of instructions, which when loaded into said computer, causes the computer to carry out the method (100) for transmitting video signal according to the preceding claim 9.
